# FASCICULE DE BREVET EUROPEEN

(11) **EP 4 576 476 B1**
(45) Date de publication et mention de la délivrance du brevet: **16.09.2026**
(21) Numéro de dépôt: 24222176.0
(22) Date de dépôt: 20.12.2024
(51) Int. Cl.: H02J 3/00, G06Q 10/04, G06Q 50/06, H02J 13/13

(54) **PROCÉDÉ AMÉLIORÉ DE PILOTAGE MULTI-NIVEAUX PAR BANDEAUX D'UN RÉSEAU ÉLECTRIQUE ; PROGRAMME D'ORDINATEUR ASSOCIÉ**
VERBESSERTES VERFAHREN ZUR MEHRSTUFIGEN STEUERUNG EINES STROMNETZES UND COMPUTERPROGRAMM DAFÜR
IMPROVED METHOD FOR MULTI-LEVEL CONTROL OF AN ELECTRICAL NETWORK; ASSOCIATED COMPUTER PROGRAM

(30) Priorité: 20.12.2023 FR 2314619
(43) Date de publication de la demande: 25.06.2025
(73) Titulaire: Commissariat à l'Energie Atomique et aux Energies Alternatives, 75015 Paris (FR)
(72) Inventeur: JOUDRIER-FAURE, Hugo, 38054 Grenoble Cedex 9 (FR)
(74) Mandataire: Lavoix

(56) Documents cités:
- CN-A- 108 536 917
- SHAO SHIBIAO ET AL: "A Distributed Sub-Gradient Optimal Scheduling Method Based on Primal Decomposition with Application to Multi-Area Interconnected Power Systems", 2021 IEEE 17TH INTERNATIONAL CONFERENCE ON AUTOMATION SCIENCE AND ENGINEERING (CASE), IEEE, 23 August 2021 (2021-08-23), pages 860 - 865, XP033983300, DOI: 10.1109/CASE49439.2021.9551681
- GUO YE ET AL: "Coordinated Multi-Area Economic Dispatch via Critical Region Projection", IEEE TRANSACTIONS ON POWER SYSTEMS, IEEE, USA, vol. 32, no. 5, 1 September 2017 (2017-09-01), pages 3736 - 3746, XP011659159, ISSN: 0885-8950, [retrieved on 20170817], DOI: 10.1109/TPWRS.2017.2655442
- WANG QI ET AL: "A Nested Decomposition Method for the AC Optimal Power Flow of Hierarchical Electrical Power Grids", IEEE TRANSACTIONS ON POWER SYSTEMS, IEEE, USA, vol. 38, no. 3, 25 July 2022 (2022-07-25), pages 2594 - 2609, XP011939392, ISSN: 0885-8950, [retrieved on 20220726], DOI: 10.1109/TPWRS.2022.3194077

## Description

La présente invention a pour domaine celui du contrôle optimal et, plus particulièrement, celui des procédés de pilotage optimal d'un réseau électrique agrégeant une pluralité de sous-réseaux électriques distribués sur un territoire.

Un tel procédé est mis en œuvre dans une infrastructure qui comporte un réseau électrique et un système de pilotage de ce réseau électrique. Le réseau électrique agrège une pluralité de sous-réseaux électriques. Les sous-réseaux sont raccordés à un réseau de distribution commun.

Les sous-réseaux électriques peuvent être de différentes natures, comme des sous-systèmes de production d'électricité (panneaux photovoltaïques - PV, éoliennes, groupes thermiques...), comme des sous-systèmes de consommation d'électricité (bâtiments industriels, bureaux, maisons d'habitation), ou encore des sous-systèmes combinant production et consommation.

Les sous-réseaux sont soumis à des contraintes différentes les uns des autres, comme par exemple le besoin d'assurer une certaine charge de production, le besoin de respecter une série de préférences utilisateurs, etc.

Les sous-réseaux électriques peuvent également être eux-mêmes complexes, en agrégeant à leur tour plusieurs composants électriques. Un sous-réseau peut par exemple être un micro-réseau formé de plusieurs composants (stockage par batteries, toitures et ombrières PV, bornes de recharge de véhicules électriques, générateurs diesel...).

Le système de pilotage comporte une pluralité d'agents périphériques et un agent central, connectés entre eux via un réseau de communication. Alors que chaque agent périphérique pilote localement un sous-réseau électrique associé, l'agent central pilote globalement le réseau.

Pour cela, chaque agent périphérique détermine une stratégie de pilotage local permettant de répondre à un objectif interne du sous-système associé, alors que l'agent central détermine une stratégie de pilotage globale permettant de répondre à un objectif global du réseau, tout en assurant une coordination de l'ensemble des sous-systèmes.

Or, les sous-systèmes électriques ont des objectifs internes spécifiques, comme la minimisation des coûts économiques, la maximisation du confort des utilisateurs, la minimisation des émissions de gaz à effet de serre, etc.

Ces objectifs internes peuvent diverger de l'objectif global que l'on souhaite optimiser au niveau du réseau dans son ensemble, comme la minimisation des pics de consommation, la minimisation des émissions de CO2, la maximisation de la flexibilité, la gestion des congestions, etc.

On connaît des procédés de pilotage de telles infrastructures fondées sur la « méthode des directions alternés » - ADMM (« alternating direction method of multipliers ») et ses variantes. C'est par exemple ce que présentent l'article Boyd, S., Parikh, N., Chu, E., Peleato, B., & Eckstein, J. (2011) "Distributed optimization and statistical learning via the alternating direction method of multipliers", Foundations and Trend in Machine learning, 3(1), 1-122, 23 Mai 2011, DOI:10.1561/2200000016, et l'article de Nguyen, T. L., Tran, Q. T., Caire, R., & Gavriluta, C. , "Agent based distributed optimal power flow using ADMM method", August 2018, conference CIRED 2018.

La méthode ADMM permet de répartir les calculs entre les acteurs périphériques, distants et l'acteur central, au cœur du réseau.

Le principal inconvénient de ce type de procédé de l'état de la technique réside en ce qu'il nécessite de nombreuses itérations pour atteindre une solution à la fois réalisable et globalement optimale.

Toutes ces itérations impliquent de nombreux échanges entre les acteurs périphériques et l'acteur central au travers du réseau de communication.

Ce procédé est par conséquent très sensible à la qualité de la connexion et aux problèmes de latence qui peuvent survenir sur ce même réseau et perturber les communications.

Un autre procédé de l'état de la technique est fondé sur la méthode dite « des bandeaux ». Elle est par exemple présentée dans l'article K. Utkarsh, F. Ding, C. Zhao, H. Padullaparti and X. Jin, "A Model-Predictive Hierarchical-Control Framework for Aggregating Residential DERs to Provide Grid Regulation Services," 2020 IEEE Power & Energy Society Innovative Smart Grid Technologies Conference (ISGT), Washington, DC, USA, 2020, pp. 1-5, doi: 10.1109/ISGT45199.2020.9087773.

Ce procédé ne nécessite pas d'itération. Il est donc beaucoup moins sensible aux problèmes de communication entre acteurs.

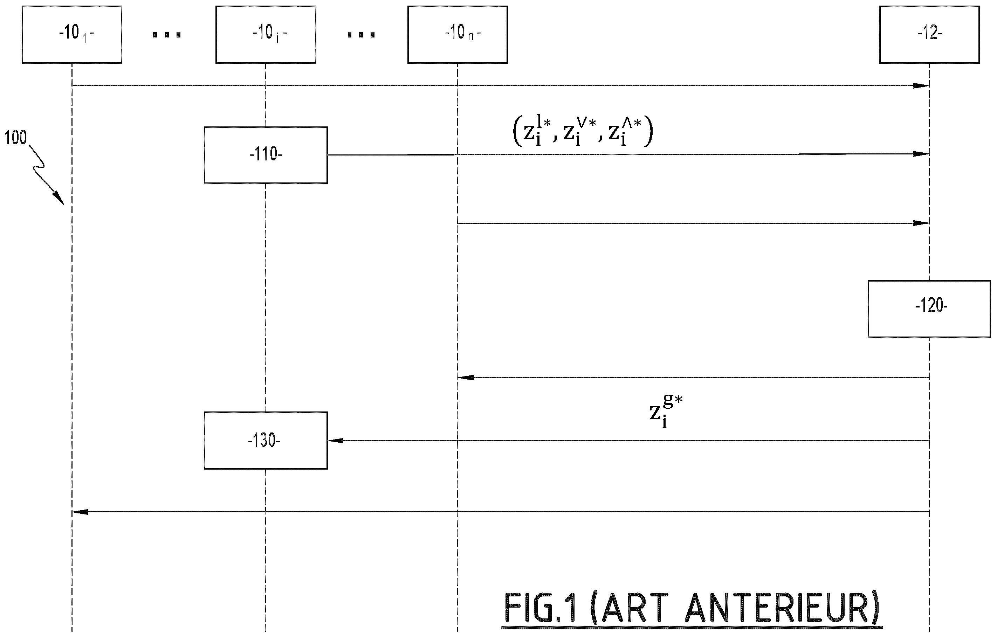

Un mode de réalisation de ce procédé va maintenant être présenté plus en détail en référence à la figure 1.

Le procédé de pilotage 100 comporte trois étapes successives.

Dans une première étape 110, chaque agent périphérique 10ᵢ (i entier entre 1 et n, le nombre d'agents périphériques) détermine sa stratégie de pilotage interne optimale, sa stratégie de pilotage externe optimale, et des marges de flexibilité globales optimales.

Par exemple, si l'on considère un sous-réseau composé d'une batterie, d'un bâtiment, et d'une toiture PV, la stratégie de pilotage interne est le détail des points de fonctionnement de chacun des composants du sous-réseau (batterie, bâtiment, toiture PV) au pas de temps souhaité (minutes par minutes, heures par heures, etc.).

La stratégie de pilotage externe est la stratégie de pilotage au point de raccordement du sous-réseau au réseau de distribution commun, sur le même pas de temps.

Les marges de flexibilité de chacun des composants sont agrégées sur chaque pas de temps pour déterminer des marges de flexibilité globales au point de raccordement.

Ces informations résultent de la résolution par l'agent périphérique 10ᵢ d'un problème d'optimisation local tel que décrit ci-dessous. Ce problème d'optimisation local est constitué de deux ensembles de variables, xᵢ et zᵢ définis de la manière suivante :
- xᵢ représente les variables internes du i^{ème} sous-réseaux, comme par exemple la puissance de charge/décharge de la batterie sur chaque pas de temps, la puissance de production PV sur chaque pas de temps, la puissance de consommation du bâtiment...
- zᵢ représente les variables externes pour le i^{ème} sous-réseaux, comme par exemple la puissance injectée ou la puissance soutirée au point de raccordement au réseau de distribution, pour chaque pas de temps.

Cette distinction entre variables internes et externes permet de séparer les informations privées, qui sont traitées localement, des informations publiques, qui sont partagées avec l'extérieur, en l'occurrence l'acteur central joutant le rôle de coordinateur du réseau.

L'algorithme d'optimisation utilisé dans l'état de la technique au niveau local permet de calculer à la fois le point de fonctionnement optimal, c'est-à-dire la valeur optimale de chaque variable interne et de chaque valeur externe, ainsi que des bornes inférieure et supérieure pour chaque variable externe du micro-réseau, l'intervalle entre les bornes inférieure et supérieure définissant la marge de flexibilité sur la variable externe correspondante.

Les variables xᵢ et zᵢ sont donc réparties en trois groupes :
- premier groupe :
   ${x}_{i}^{l}$: les variables internes de pilotage de chaque composant du sous-réseau i, correspondant à une trajectoire de fonctionnement interne calculée localement (d'où l'indice « I »);
   ${z}_{i}^{l}$ : les variables externes de pilotage du sous-réseau i, correspondant à une trajectoire de fonctionnement externe calculée localement (d'où l'indice « I »);
- second groupe :
   ${x}_{i}^{∨}$ : les bornes inférieures de pilotage de chaque composant du sous-réseau i, correspondant à une trajectoire de flexibilité interne inférieure, calculée localement ;
   ${z}_{i}^{∨}$ : les bornes inférieures de pilotage du sous-réseau i, correspondant à une trajectoire de flexibilité externe inférieure, calculée localement ;
- troisième groupe :
   ${x}_{i}^{∧}$ : les bornes supérieures de pilotage de chaque composant du sous-réseau i, correspondant à une trajectoire de flexibilité interne supérieure, calculée localement ;
   ${z}_{i}^{∧}$ : les bornes supérieures de pilotage du sous-réseau i, correspondant à une trajectoire de flexibilité externe supérieure, calculée localement.

Par ailleurs, les trajectoires doivent respecter un certain nombre de contraintes, notamment physiques. Par exemple, il est impossible de stocker plus d'énergie dans une batterie que sa capacité, de dépasser une puissance de charge ou une puissance de décharge prédéfinie, de ne pas respecter des équations de bilan de puissance, etc.

Toutes ces contraintes sont décrites, sous forme matricielle, de la manière suivante : ${A}_{i} {x}_{i} + {B}_{i} {z}_{i} = {c}_{i}$ ${A}_{i} {x}_{i}^{∧} + {B}_{i} {z}_{i}^{∧} = {c}_{i}$ ${A}_{i} {x}_{i}^{∨} + {B}_{i} {z}_{i}^{∨} = {c}_{i}$

Cette matrice de contraintes permet de filtrer les solutions réalisables par le sous-réseau (ou trajectoires), qui respectent les contraintes, des solutions non-réalisables, qui ne respectent pas les contraintes.

Enfin, pour sélectionner la trajectoire optimale parmi l'ensemble des trajectoires possibles, il convient de définir une fonction de coût. Par exemple, et sans perte de généralités, la fonction de coût suivante est minimisée : ${f}_{x} \left({x}_{i}\right) + {f}_{z} \left({z}_{i}\right) + {α}_{flex} \left({z}_{i}^{∧}-{z}_{i}^{∨}\right)$ où fₓ est une fonction de coût partielle prenant en compte uniquement les variables internes, f_{z} est une fonction de coût partielle prenant en compte uniquement les variables externes, et α_{flex} un coefficient prédéfini.

La fonction de coût décrite ici permet d'optimiser la trajectoire et, dans le même temps, de déterminer des trajectoires de flexibilité à la hausse et à la baisse en cherchant à maximiser l'écart entre les trajectoires supérieure et inférieure.

Le problème d'optimisation local que doit résoudre chaque agent périphérique 10ᵢ d'un sous-réseau se résume donc de la manière suivante : $\left(\begin{matrix}{x}_{i}^{l ∗} , {x}_{i}^{∨ ∗} , {x}_{i}^{∧ ∗} \\ {z}_{i}^{l ∗} , {z}_{i}^{∨ ∗} , {z}_{i}^{∧ ∗}\end{matrix}\right) = {argmin}_{{x}_{i} , {z}_{i}} {f}_{x} \left({x}_{i}\right) + {f}_{z} \left({z}_{i}\right) + {α}_{flex} \left({z}_{i}^{∧}-{z}_{i}^{∨}\right)$ $s . t {A}_{i} {x}_{i} + {B}_{i} {z}_{i} = {c}_{i}$ ${A}_{i} {x}_{i}^{∧} + {B}_{i} {z}_{i}^{∧} = {c}_{i}$ ${A}_{i} {x}_{i}^{∨} + {B}_{i} {z}_{i}^{∨} = {c}_{i}$ où le résultat de l'optimisation donne un ensemble de point de fonctionnement, c'est-à-dire de valeurs particulières aux variables et bornes. Ces valeurs optimales portent une « * ».

Le procédé 100 se poursuit par une étape 120, réalisée par l'agent central 12, suite à la réception, par l'intermédiaire d'un réseau de communication, des valeurs des variables externes de chacun des sous-réseaux i : $\left({z}_{i}^{l ∗}, {z}_{i}^{∨ ∗}, {z}_{i}^{∧ ∗}\right)$

L'agent central 12, en résolvant un problème d'optimisation global (d'où l'indice « g »), détermine de nouvelles trajectoires de fonctionnement externes déterminées globalement pour chacun des sous-réseaux : $\left({z}_{1}^{g ∗},…,{z}_{i}^{g ∗},…,{z}_{n}^{g ∗}\right)$

Ces trajectoires doivent pouvoir être réalisées par l'ensemble des sous-réseaux, c'est-à-dire qu'elles doivent rester dans les marges de fonctionnement communiquées : ${z}_{i}^{∨ ∗} \leq {z}_{i}^{g ∗} \leq {z}_{i}^{∧ ∗}$

Il est également possible que l'agrégation des trajectoires de fonctionnement externes locales des différents sous-réseaux doivent respecter un autre ensemble de contraintes.

C'est le cas par exemple lorsque l'agent central cherche à positionner l'infrastructure sur des marchés de flexibilité en participant par exemple à des services de réserve de fréquence pour équilibrer un réseau électrique, ou pour répondre à des problématiques de congestion du réseau.

Ces autres contraintes peuvent s'écrire : ${\sum }_{i} {D}_{i} {z}_{i} = h$

Ou, plus synthétiquement : $Dz = h$

L'objectif global de l'agent central étant différent des objectifs locaux de chacun des agents de périphérie, la fonction de coût qui est associée au problème d'optimisation global est différente. On la note : $g ′ \left(z\right)$

L'étape 120 correspond donc à la résolution du problème d'optimisation suivant : $\left({z}_{1}^{g ∗},…,{z}_{1}^{g ∗},…,{z}_{n}^{g ∗}\right) = {argmin}_{z} g ′ \left(z\right)$ $s . t Dz = h$ ${z}_{i}^{∨ ∗} \leq {z}_{i} \leq {z}_{i}^{∧ ∗}$

Après avoir déterminé de nouveaux points de fonctionnement pour chacun des sous-réseaux i, l'agent central 12 communique les nouvelles stratégies ${z}_{i}^{g ∗}$ à chacun d'entre eux.

Puis, dans une étape 130, chacun des agents périphériques 10ᵢ reçoit, via le réseau de communication, le point de fonctionnement optimisé globalement pour ses variables externes : ${z}_{i}^{g ∗}$.

L'objectif ici alors d'optimiser la stratégie de pilotage interne de chacun des composants du micro-réseau i tout en respectant la trajectoire globale en tant que nouvelle contrainte imposée par l'agent central.

Ainsi l'ensemble de contraintes n'est plus comme lors de l'étape 110 : ${A}_{i} {x}_{i} + {B}_{i} {z}_{i} = {c}_{i}$

Mais devient : ${A}_{i} {x}_{i} = {c}_{i} - {B}_{i} {z}_{i}^{g ∗}$

La trajectoire globale ${z}_{i}^{g ∗}$ est maintenant imposée. Ce n'est donc plus une variable sur laquelle l'agent local peut avoir une influence.

La fonction de coût est également simplifiée, puisqu'il s'agit maintenant de minimiser la seule contribution des variables internes : $min {f}_{x} \left({x}_{i}\right)$

L'étape 130 correspond donc à la résolution du second problème d'optimisation local suivant : ${X}_{i}^{g ∗} = {argmin}_{{x}_{i}} {f}_{x} \left({x}_{i}\right)$ $s . t {A}_{i} {x}_{i} = {c}_{i} - {B}_{i} {z}_{i}^{g ∗}$

L'inconvénient principal de ce procédé est l'absence de pilotage global optimal en connaissance des coûts internes que cela peut représenter.

Lors de l'étape 120, l'agent central décide d'une trajectoire globale et la répartie de manière à s'éloigner de la trajectoire optimale locale de manière identique pour tous les sous-réseaux.

Or, pour deux sous-réseaux différents, s'éloigner de la trajectoire optimale local n'a pas le même coût. Pour un premier site cela peut représenter une légère dégradation de son coût de fonctionnement interne tandis que pour un second site cela peut représenter une très grande dégradation de son coût de fonctionnement interne.

On connait également le procédé présenté dans l'article SHAO SHIBIAO ET AL: "A Distributed Sub-Gradient Optimal Scheduling Method Based on Primal Decomposition with Application to Multi-Area Interconnected Power Systems", 2021 IEEE 17TH INTERNATIONAL CONFERENCE ON AUTOMATION SCIENCE AND ENGINEERING (CASE), IEEE, 23 août 2021 (2021-08-23), pages 860-865, XP033983300, DOI: 10.1109/CASE49439.2021.9551681.

Le but de l'invention est alors de proposer un procédé amélioré de pilotage multi-niveaux par bandeaux permettant de répondre à ce problème.

A cet effet, l'invention a pour objet un procédé, et un programme d'ordinateur selon les revendications annexées.

L'invention apparaîtra plus clairement à la lecture de la description qui va suivre, donnée uniquement à titre d'exemple non limitatif, et faite en référence aux dessins dans lesquels :
- la figure 1 est une représentation schématique d'un procédé de pilotage multi-niveaux par bandeaux selon l'état de la technique ;
- la figure 2 est une représentation schématique sous forme de blocs d'un système pour la mise en œuvre d'un procédé de pilotage multi-niveaux par bandeaux selon l'état de la technique ou selon l'invention ;
- la figure 3 est une représentation schématique d'un procédé de pilotage multi-niveaux par bandeaux selon l'invention ; et,
- la figure 4 est un graphe illustrant la prise en compte du coût de la flexibilité pour l'optimisation globale.

Le procédé selon l'invention est un procédé de pilotage multi-niveaux par bandeaux, avec un pilotage au niveau local pour chacun des micro-réseaux et un pilotage global centralisé pour la coordination des différents micro-réseaux.

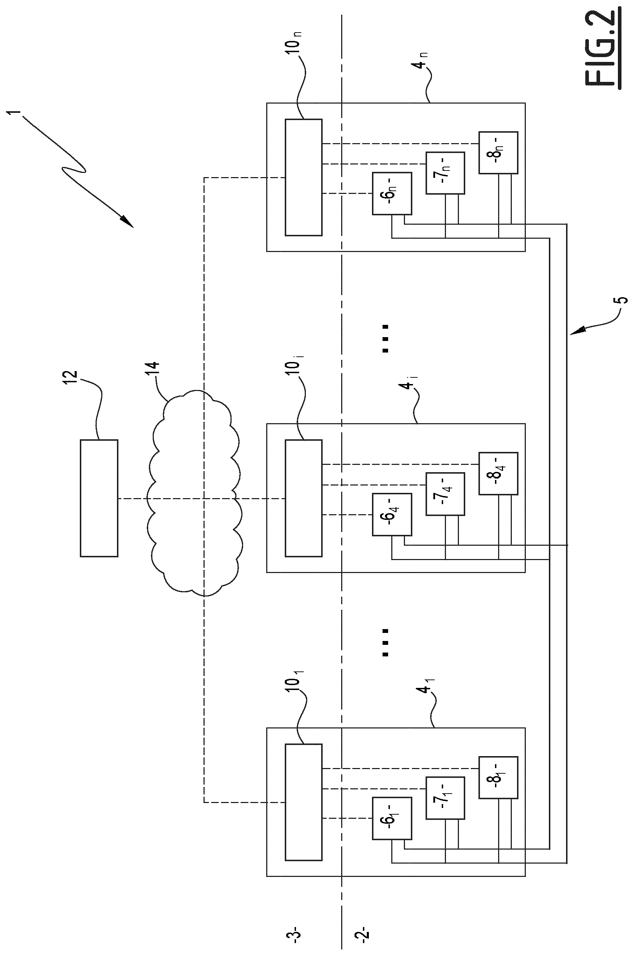

Ce procédé est mis en œuvre dans une infrastructure qui va maintenant être présentée en référence à la figure 2.

L'infrastructure 1 comporte un réseau électrique 2 et un système de pilotage 3 du réseau électrique 2.

Le réseau électrique 2 agrège une pluralité de sous-réseaux électriques 4ᵢ, où i est un indice entier entre 1 et n, n étant le nombre de sous-réseaux constitutifs du réseaux 2.

Par exemple, le micro-réseau 4₁ regroupe plusieurs composants, comme par exemple :
- une centrale PV 6₁ de 100 MW crête ;
- un bâtiment résidentiel 7₁ du type B1 dont une partie des charges tels que chauffage / climatisation peut être modulée à la hausse ou à la baisse ;
- une station de recharge 8₁ pour véhicules électriques longue durée (possibilité de faire du décalage de charge), avec quelques besoins de charges rapide.

Le micro-réseau 4ᵢ regroupe plusieurs composants, comme par exemple :
- une centrale PV 6ᵢ de 50 MW crête ;
- un système de stockage stationnaire 7ᵢ d'une capacité de 5 MWh et d'une puissance de +/- 1MW à la charge/décharge ;
- une station de recharge 8ᵢ pour véhicules électriques.

Le micro-réseau 4ₙ regroupe plusieurs composants comme par exemple :
- un système de stockage stationnaire 6ₙ d'une capacité de 10 MWh et d'une puissance de +/- 1 MW à la charge/décharge ;
- un générateur diesel 7ₙ, de 5 MW ;
- un bâtiment industriel 8ₙ avec une production nécessitant de gros besoins et un besoin d'alimentation continue.

Les sous-réseaux 4ᵢ sont raccordés à un réseau de distribution 5 commun. Ce dernier peut par exemple être lui-même connecté à un autre réseau, comme un réseau grille (« grid » en anglais).

Le système de pilotage 3 comporte une pluralité d'agents périphériques 10ᵢ et un agent central 12.

L'agent central 12 est connecté aux agents périphériques 10ᵢ par un réseau de communication 14 adapté. Le réseau 14 est par exemple un réseau de communication IP, comme le réseau Internet. L'agent central 12 et chaque agent périphérique 10ᵢ sont ainsi en communication bidirectionnelle.

Chaque agent périphérique 10ᵢ équipe un unique sous-réseau électrique 4ᵢ pour piloter localement le fonctionnement de ce sous-réseau. Chaque agent périphérique 10ᵢ optimise au niveau local les variables de fonctionnement du micro-réseau.

Chaque agent périphérique 10ᵢ est constitué d'au moins un calculateur convenablement programmé pour la mise en œuvre du procédé selon l'invention. Ce calculateur comporte par exemple une mémoire et un processeur associé à la mémoire. La mémoire stockant des instructions de code qui, lorsqu'elles sont exécutées par le processeur, participent à la mise en œuvre du procédé selon l'invention.

L'agent central 12 pilote globalement le fonctionnement de l'ensemble du réseau 2. L'agent central 12 joue le rôle de coordinateur. L'agent central 12 est constitué d'au moins un calculateur convenablement programmé pour la mise en œuvre du procédé selon l'invention. Ce calculateur comporte par exemple une mémoire et un processeur associé à la mémoire. La mémoire stockant des instructions de code qui, lorsqu'elles sont exécutées par le processeur, participent à la mise en œuvre du procédé selon l'invention.

L'agent central 12 est par exemple un service hébergé dans une architecture informatique en « nuage (« cloud »). L'agent central 12 peut avantageusement présenter une puissance de calcul bien plus importe que celle des agents locaux 10ᵢ. Cela permet d'offrir des services de flexibilité pour la gestion du réseau qui nécessitent des puissances de calcul importantes.

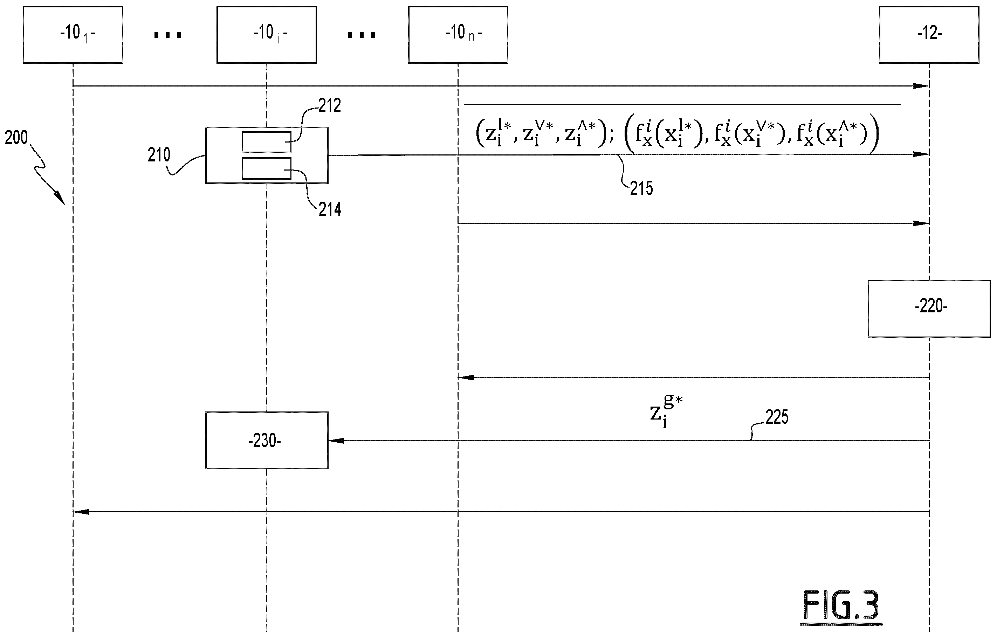

La figure 3 représente de manière schématique le procédé 200 selon l'invention.

De manière générale, le procédé 200 est une amélioration du procédé 100 de l'état de la technique. On reprend donc dans ce qui suit les notations introduites ci-dessus pour le procédé 100, notamment les notations pour les variables internes et externes, les fonctions de coût, les contraintes et les valeurs optimales calculées pour les variables et les bornes.

Chaque agent périphérique 10ᵢ calcule et transmet des informations additionnelles à l'agent central 12.

Ces informations additionnelles correspondent à des évaluations de la dégradation de l'objectif local considéré lors de l'optimisation locale, notamment pour chacune des deux marges de flexibilité, respectivement supérieure et inférieure.

Selon le procédé 200, chaque agent périphérique 10ᵢ effectue d'abord une première étape 210.

L'étape 210 comporte une première sous-étape 212, suivie d'une seconde sous-étape 214.

La première sous-étape 212 consiste à résoudre localement un premier problème d'optimisation local. Ce dernier est plus simple que celui résolu dans l'étape 110 du procédé 100.

En effet, on cherche maintenant à déterminer seulement la stratégie de pilotage optimisée localement pour le micro-réseau 4ᵢ. Celle-ci peut s'écrire de manière condensée : $\left({x}_{i}^{l ∗}, {z}_{i}^{l ∗}\right) = {argmin}_{{x}_{i} , {z}_{i}} {f}_{x}^{i} \left({x}_{i}\right) + {f}_{z}^{i} \left({z}_{i}\right)$ $s . t . {A}_{i} {x}_{i} + {B}_{i} {z}_{i} = {c}_{i}$

Plus généralement, la i^{ème} fonction de coût locale s'écrit : 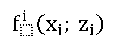 et les contraintes s'écrivent : ${C}_{i} \left({x}_{i}; {z}_{i}\right) = 0$

Dans cette première sous-étape 212, il n'y a pas de calcul de marge de flexibilité. Elles seront calculées localement et séparément dans la seconde sous-étape 214 suivante.

L'avantage de séparer en plusieurs étapes l'optimisation des variables locales, internes et externes, réside dans le fait que la trajectoire optimale ainsi calculée n'est alors plus influencée par le calcul des bornes de flexibilité.

En effet, dans l'état de la technique, selon les coefficients α_{flex} choisis pour la fonction de coût partielle, la résolution dans un même problème d'optimisation du calcul des bornes de flexibilité et de la trajectoire optimale peut, dans certains cas, mener à des solutions optimales dégradées ayant tendance à maximiser les marges de flexibilité au détriment de la trajectoire optimale.

La solution proposée ici ne souffre pas de ce désavantage puisque la trajectoire optimale et les marges de flexibilité sont traitées de manière indépendantes et séquentielles.

La stratégie de pilotage calculée à l'issue de la première sous-étape 212 est donc la stratégie de pilotage la plus optimale possible du micro-réseau 4ᵢ considéré. Elle conduit à la détermination des valeurs ${x}_{i}^{l ∗}$ et ${z}_{i}^{l ∗}$.

Puis, la seconde sous-étape 214 consiste à résoudre, toujours localement, deux problèmes d'optimisation permettant de déterminer, d'une part, la borne de flexibilité supérieure et, d'autre part, la borne de flexibilité inférieure, pour la stratégie de pilotage localement optimale du micro-réseau déterminée en 212.

Ainsi, pour le calcul de la borne inférieure sur les variables externes 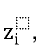 , le problème d'optimisation à résoudre s'écrit : $\left({x}_{i}^{∨ ∗}, {z}_{i}^{∨ ∗}\right) = {argmin}_{{x}_{i} , {z}_{i}} {α}_{i , flex}^{∨} \left({z}_{i}^{l ∗}-{z}_{i}^{∨}\right)$ $s . t . {A}_{i} {x}_{i}^{∨} + {B}_{i} {z}_{i}^{∨} = {c}_{i}$

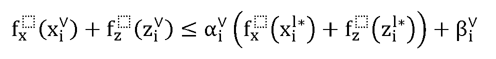

Et, pour le calcul de la borne supérieure sur les variables externes 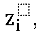 , le problème d'optimisation à résoudre s'écrit : $\left({x}_{i}^{∧ ∗}, {z}_{i}^{∧ ∗}\right) = {argmin}_{{x}_{i} , {z}_{i}} {α}_{i , flex}^{∧} \left({z}_{i}^{∧}-{z}_{i}^{l ∗}\right)$ $s . t . {A}_{i} {x}_{i}^{∧} + {B}_{i} {z}_{i}^{∧} = {c}_{i}$ 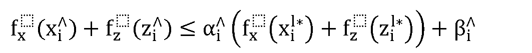 où les coefficients ${α}_{i , flex}^{∧}$ et ${α}_{i , flex}^{∨}$ peuvent être identiques ou différents pour les bornes supérieure et inférieure et/ou d'un sous-réseaux à l'autre.

La contrainte additionnelle permet de déterminer les bornes avec un contrôle de la dégradation acceptable de la valeur d'optimalité. Ce contrôle s'effectue à travers le choix des coefficients ${α}_{i}^{∨}$ et ${β}_{i}^{∨}$, d'une part, et des coefficients ${α}_{i}^{∧}$ et ${β}_{i}^{∧}$, d'autre part.

Cette amélioration par rapport au procédé 100 permet de limiter les bornes de flexibilité sur des valeurs de la fonction de coût qui sont acceptables localement (dégradation du confort des utilisateurs d'un bâtiment par exemple).

La séparation du calcul des bornes en deux sous problèmes permet également de pouvoir paralléliser le processus de résolution, en plus de diminuer la complexité du problème d'optimisation, ce qui permet de gagner en temps de résolution et en espace mémoire nécessaire aux calculs, ce qui constitue un avantage important pour un déploiement dans une petite unité de calcul locale, comme l'agent périphérique 10ᵢ.

A l'issue des étapes 212 et 214, chaque agent local 10ᵢ transmet (étape 215) à l'agent central 12, via le réseau de communication 14, les informations suivantes :
- la stratégie de pilotage optimale pour les variables externes ${z}_{i}^{l ∗}$;
- la stratégie de pilotage optimale pour la borne de flexibilité inférieure des variables externes ${z}_{i}^{∨ ∗}$; et,
- la stratégie de pilotage optimale pour la borne de flexibilité supérieure des variables externes ${z}_{i}^{∧ ∗}$,
mais également les informations additionnelles suivantes :
- le coût de la stratégie de pilotage optimale locale sur les variables internes ${f}_{x}^{i} \left({x}_{i}^{l ∗}\right)$;
- le coût de la stratégie de pilotage optimale locale pour la borne de flexibilité inférieure des variables internes ${f}_{x}^{i} \left({x}_{i}^{∨ ∗}\right)$; et,
- le coût de la stratégie de pilotage optimale locale pour la borne de flexibilité supérieure des variables internes ${f}_{x}^{i} \left({x}_{i}^{∧ ∗}\right)$.

En variante, un agent local 10ᵢ peut également transmettre le coût de la stratégie de pilotage optimale locale sur les variables externes et les bornes de flexibilités associées : ${f}_{z}^{i} \left({z}_{i}^{l ∗}\right) , { f}_{z}^{i} \left({z}_{i}^{∨ ∗}\right)$, et ${f}_{z}^{i} \left({z}_{i}^{∧ ∗}\right)$. Cependant, l'agent central connaît généralement le coût ${f}_{z}^{i}$ pour chacune des variables externes des sous-réseaux, puisque ces variables externes sont publiques et correspondent à des points de raccordement sur le réseau de distribution commun 5.

L'étape 220, réalisée par l'agent central 12, consiste alors à résoudre un problème d'optimisation globale, avec une fonction de coût globale g traduisant l'objectif globale à optimiser, et en respectant l'ensemble des contraintes, notamment une nouvelle contrainte sur les bornes de flexibilité. Le problème d'optimisation globale à résoudre s'écrit : $\left({z}_{1}^{g *},…,{ z}_{i}^{g *},…,{ z}_{n}^{g *}\right) = {argmin}_{{z}_{i}} g \left(z\right)$ $s . t Dz = h$ ${z}_{i}^{∨ ∗} \leq {z}_{i} \leq {z}_{i}^{∧ ∗}$

Ce problème d'optimisation résout deux problèmes à la fois :
- le premier problème est de déterminer une trajectoire de pilotage optimale globale pour l'ensemble du système 2. Cette trajectoire a pour nouvelle contrainte de devoir être dans l'enveloppe définie par toute les marges de flexibilités des micro-réseaux 10ᵢ : ${z}_{i}^{∨ ∗} \leq {z}_{i} \leq {z}_{i}^{∧ ∗}$
- le second problème est de répartir cette trajectoire de pilotage globale entre les micro-réseaux, de manière à déterminer, pour chacun des micro-réseaux 10ᵢ, sa participation dans cette trajectoire globale.

La résolution de ce second problème est primordiale puisqu'il faut faire les bons choix, c'est-à-dire décider quel micro-réseau doit augmenter/baisser sa production/consommation, de combien et à quel moment. Les informations additionnelles de coût communiquées par chaque micro-réseaux sont alors utilisées pour guider cette répartition.

Pour ce faire, les informations additionnelles permettent de construire un coût approximatif Fᵢ pour chaque sous-réseau 10ᵢ. Il s'agit d'une fonction linéaire par morceaux.

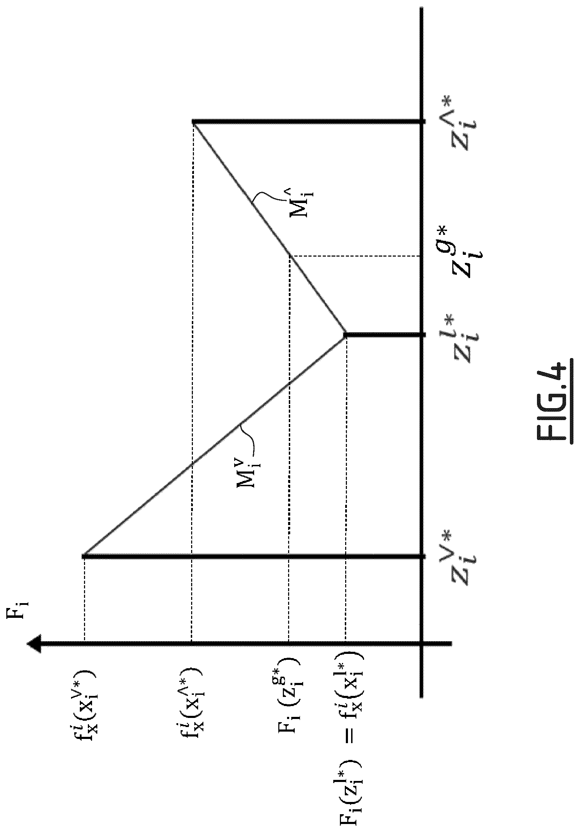

Comme par exemple représentée sur la figure 4, dans un mode de réalisation simple le i^{ème} coût approximatif Fᵢ est constitué de deux segments.

Un premier segment de droite inférieure ${M}_{i}^{∨}$ connecte les points de coordonnées $\left({z}_{i}^{∨ ∗};{ f}_{x}^{i}\left({x}_{i}^{∨ ∗}\right)\right)$ et $\left({z}_{i}^{l ∗};{ f}_{x}^{i}\left({x}_{i}^{l ∗}\right)\right)$, d'une part, et un second segment de droite supérieur ${M}_{i}^{∧}$ connecte les points de coordonnées $\left({z}_{i}^{l ∗};{ f}_{x}^{i}\left({x}_{i}^{l ∗}\right)\right)$ et $\left({z}_{i}^{∧ ∗};{ f}_{x}^{i}\left({x}_{i}^{∧ ∗}\right)\right)$, d'autre part.

Au minimum de l'approximation, on a la relation ${F}_{i} \left({z}_{i}^{l ∗}\right) = {f}_{i} \left({x}_{i}^{l ∗}\right)$ et les maximum de l'approximation sont données pour les marges de flexibilité autorisées.

Ce coût approximatif permet d'évaluer l'impact de la déviation à la trajectoire optimale sur le coût interne du i^{ème} sous-réseau 4ᵢ entre les valeurs optimales locales des variables externes ${z}_{i}^{l ∗}$ et les valeurs optimales globales des variables externes ${z}_{i}^{g ∗}$.

L'utilisation d'une telle approximation permet d'ordonner les flexibilités des micro-réseaux et de répercuter la déviation calculée par la prise en compte de l'objectif global sur les micro-réseaux pour lesquels cette déviation a le minimum d'impact sur l'objectif interne.

Pour cela, la fonction de coût g peut se diviser en deux parties $g = GlobalCost \left(z\right) + {\sum }_{i} InternalCost \left({z}_{i}\right)$

Avec une première partie, GlobalCost, correspondant au gain issu de la participation coordonnée de l'ensemble des sous-réseaux 4ᵢ à la stratégie globale, comme un gain de revenus pour une participation à des services de flexibilité rémunérateurs.

La deuxième partie de la fonction de coût g, Σᵢ InternalCost(zᵢ), correspond à l'estimation des coûts internes, en utilisant l'approximation linéaire par morceaux, comme celle de la figure 4, pour chaque trajectoire de pilotage globale zᵢ, d'un sous-réseau 4ᵢ, décrite précédemment : $InternalCost \left({z}_{i}\right) = {F}_{i} \left({z}_{i}\right) - {F}_{i} \left({z}_{i}^{l ∗}\right)$

Cela conduit à l'optimisation globale des variables externes ${z}_{i}^{g ∗}$, chacune de ces valeurs correspondant à un coût local ${F}_{i} \left({z}_{i}^{g ∗}\right)$.

Enfin, dans l'étape 225, l'agent central 12 transmet à chacun des agents périphériques 10ᵢ, le nouveau point de fonctionnement ${z}_{i}^{g ∗}$.

Puis, chacun des agents périphériques 10ᵢ met en œuvre l'étape 230.

Celle-ci est identique à l'étape 130 du procédé 100 de l'état de la technique.

Ainsi, chaque micro-réseau 4ᵢ calcule sa stratégie de pilotage optimale locale de manière à suivre la stratégie de pilotage optimale globale imposée : ${x}_{i}^{g ∗} = {argmin}_{{x}_{i}} {f}_{x} \left({x}_{i}\right)$ $s . t {A}_{i} {x}_{i} = {c}_{i} - {B}_{i} {z}_{i}^{g ∗}$

L'agent périphérique 10ᵢ pilote ensuite les différents composants du sous-réseau électrique 4ᵢ, en utilisant les ${x}_{i}^{g ∗}$ en tant que consigne de pilotage.

Le procédé 200 est itéré pour le pas de temps suivant.

En variante, le procédé 200 peut être itéré pour un même pas de temps, pour rapprocher davantage de la solution de pilotage global optimal.

Cette variante permet, à chaque itération, de raffiner, pour chacun des micro-réseaux, l'approximation du coût d'une déviation entre trajectoire locale et trajectoire globale.

Cette information plus précise permet au coordinateur d'affiner l'optimisation de la trajectoire globale et la participation de chaque micro-réseau à cette stratégie globale.

Il est nécessaire de souligner que l'objectif local d'un sous-réseau peut être différent de l'objectif local d'un autre sous-réseau et surtout de l'objectif global du réseau dans son ensemble. Ainsi, les fonctions de coût, notamment les fonctions partielles internes ${f}_{x}^{i}$, les fonctions partielles externes ${f}_{z}^{i}$ et les fonctions partielles de marge (coefficients ${α}_{flex}^{i}$) portent l'indice i du sous-réseau qui les utilise.

La forme de ces fonctions partielles peut aussi dépendre du temps afin de privilégier certains pas de temps de l'horizon temporel, notamment les pas de temps pour lesquels la flexibilité est importante. De cette manière la flexibilité calculée n'est pas constante sur l'ensemble des pas de temps mais peut varier au cours du temps. Il est ainsi plus pertinent d'avoir plus de flexibilité lorsque le prix de l'électricité est élevé et, au contraire, moins de flexibilité lorsque le prix de l'électricité est faible. Cela peut aussi conduire à une amélioration du fonctionnement du réseau électrique, avec la prise en compte des contraintes physiques du réseau, tel que les problèmes de congestion de ligne, de limitation sur les transits de puissance, etc.

Ainsi, selon l'invention, le coordinateur du réseau dispose d'informations additionnelles lui permettant de répartir la réalisation de l'objectif global entre les différents sous-réseaux.

Il est à noter que si un micro-réseau indique une marge de flexibilité importante, cela ne donne pas d'information sur l'impact de la déviation à la stratégie de pilotage optimale locale et sur la dégradation de son propre objectif local.

Avec l'invention, la dégradation de l'objectif local peut être contrôlée de manière à la limiter.

Le mode de réalisation particulier présenté en détail ci-dessus présente l'avantage supplémentaire de possibilités de parallélisation (lors de l'étape 214 du procédé 200) des calculs en diminuant la complexité des problèmes traités, notamment dans les premières étapes d'optimisation locale.

Dans le mode de réalisation particulier présenté en détail ci-dessus les fonctionnalités offertes par les agents, périphériques ou central, sont sous forme d'un logiciel, ou d'une brique logicielle, exécutable par le processeur du calculateur associé. Ce logiciel, ou programme d'ordinateur, est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Le procédé selon l'invention trouve de nombreuses applications, comme :
- agréger plusieurs sites (micro-réseaux) qui ont des capacités et des puissances limitées, pour positionner le réseau coordonné résultant sur des marchés de flexibilité.
- piloter un réseau de distribution avec une production PV et une consommation locale pour favoriser une consommation locale et éviter au maximum le refoulement de la puissance active sur le réseau de transport. Cela permet également d'améliorer la stabilité du réseau de transport et la gestion globale du réseau.

## Revendications

1. Procédé (200), mis en œuvre par ordinateur, de pilotage multi-niveaux par bandeaux d'une infrastructure (1) comportant un réseau électrique (2) et un système de pilotage (3) du réseau électrique, le réseau électrique (2) agrégeant une pluralité de sous-réseaux électriques (4ᵢ), les sous-réseaux électriques (4ᵢ) étant raccordés à un réseau de distribution (5) commun, et le système de pilotage (3) comportant une pluralité d'agents périphériques (10ᵢ) et un agent central (12), l'agent central (12) étant connecté aux agents périphériques (10ᵢ) par un réseau de communication (14), chaque agent périphérique (10ᵢ) étant associé à un unique sous-réseau électrique (4ᵢ) pour piloter localement un fonctionnement du sous-réseau électrique associé, et l'agent central (12) pilotant globalement un fonctionnement du réseau électrique (2), le procédé comportant les étapes de :
- détermination, par chaque agent périphérique (10ᵢ), d'une première stratégie de pilotage en effectuant une première optimisation locale, en mettant en œuvre une i^{ème} fonction de coût locale, sur un ensemble de variables de pilotage du i^{ème} sous-réseau électrique (4ᵢ), ledit ensemble de variables comportant, d'une part, des variables internes xᵢ, associées à des composants du i^{ème} sous-réseau électrique, et, d'autre part, des variables externes zᵢ associées au point de raccordement du i^{ème} sous-réseau électrique au réseau de distribution (5), la i^{ème} fonction de coût locale étant la somme d'une première i^{ème} fonction de coût locale partielle ${f}_{x}^{i}$, dépendant uniquement des variables internes xᵢ et d'une seconde i^{ème} fonction de coût locale partielle externe ${f}_{z}^{i}$ dépendant uniquement des variables externes zᵢ,
la première stratégie de pilotage conduisant à des valeurs optimales locales des variables internes, ${x}_{i}^{l ∗}$, des valeurs optimales locales des variables externes ${z}_{i}^{l ∗}$, des valeurs optimales locales des bornes inférieures des variables internes ${x}_{i}^{∨ ∗}$, des valeurs optimales locales des bornes inférieures des variables externes ${z}_{i}^{∨ ∗}$, les valeurs optimales locales des bornes supérieures des variables internes ${x}_{i}^{∧ ∗}$ et des valeurs optimales de bornes supérieures des variables externes ${z}_{i}^{∧ ∗}$;
- transmission, par chaque agent périphérique (10ᵢ) à l'agent central (12), d'une première pluralité d'informations comportant, pour chaque sous-réseau électrique (4ᵢ) : les valeurs optimales locales des variables externes ${z}_{i}^{l ∗}$; les valeurs optimales locales de bornes inférieures des variables externes ${z}_{i}^{∨ ∗}$; et les valeurs optimales de bornes supérieures des variables externes ${z}_{i}^{∧ ∗}$ du sous-réseau ;
- détermination, par l'agent central (12), d'une stratégie de pilotage globale en effectuant une optimisation globale sur l'ensemble des variables externes zᵢ des différents sous-réseaux électriques (4ᵢ) ;
- transmission, par l'agent central (12) à chaque agent périphérique (10ᵢ), d'une seconde pluralité d'informations comportant, pour chaque sous-réseau électrique (4ᵢ), les valeurs optimales globales des variables externes ${z}_{i}^{g ∗}$; et,
- détermination, par chaque agent périphérique (10ᵢ), d'une seconde stratégie de pilotage en effectuant une seconde optimisation locale, sous contrainte des valeurs optimales globales des variables externes ( ${z}_{i}^{g ∗}$), sur les variables internes xᵢ,
le procédé étant **caractérisé en ce que** la première pluralité d'information comporte, en outre, des informations additionnelles, les informations additionnelles comportant, pour chaque sous-réseau électrique (4ᵢ) : une valeur de la première i^{ème} fonction de coût locale partielle pour les valeurs optimales locales des variables internes, ${f}_{x}^{i} \left({x}_{i}^{l ∗}\right)$; une valeur de la première i^{ème} fonction de coût locale partielle interne pour les valeurs optimales locales des bornes inférieures des variables internes, ${f}_{x}^{i} \left({x}_{i}^{∨ ∗}\right)$; et une valeur de la première i^{ème} fonction de coût locale partielle interne pour les valeurs optimales locales des bornes supérieures des variables internes, ${f}_{x}^{i} \left({x}_{i}^{∧ ∗}\right)$,
et **en ce que** la détermination, par l'agent central (12), d'une stratégie de pilotage optimisée globalement prend en compte les informations additionnelles pour répartir la contribution de chaque sous-réseau (4ᵢ) à la stratégie de pilotage optimisée globalement en tenant compte, pour chaque sous-réseau (4ᵢ), d'une déviation d'un i^{ème} coût approximatif (Fᵢ), le i^{ème} coût approximatif étant une fonction construite à partir des informations additionnelles transmises par le i^{ème} agent périphérique (10ᵢ) et permettant d'évaluer une dégradation du coût de la première stratégie de pilotage optimisée localement entre les valeurs optimales locales des variables externes ${z}_{i}^{l ∗}$ et les valeurs optimales globales des variables externes ${z}_{i}^{g ∗}$.

2. Procédé selon la revendication 1, dans lequel le i^{ème} coût approximatif est une fonction linéaire par morceaux

3. Procédé selon la revendication 2, dans lequel le i^{ème} coût approximatif comporte un segment inférieur connectant le point de coordonnées ${z}_{i}^{∨ ∗}$ et ${f}_{x}^{i} \left({x}_{i}^{∨ ∗}\right)$ et le point de coordonnées ${z}_{i}^{l ∗}$ et ${f}_{x}^{i} \left({x}_{i}^{l ∗}\right)$ et un segment supérieur connectant le point de coordonnées ${z}_{i}^{l ∗}$; ${f}_{x}^{i} \left({x}_{i}^{l ∗}\right)$ et le point de coordonnées ${z}_{i}^{∧ ∗}$ et ${f}_{x}^{i} \left({x}_{i}^{∧ ∗}\right)$.

4. Procédé selon l'une quelconque des revendications 1 à 3, dans lequel l'optimisation globale s'écrit : $\left({z}_{1}^{g ∗},…,{z}_{i}^{g ∗},…,{z}_{n}^{g ∗}\right) = {argmin}_{{z}_{i}} g \left({z}_{i}\right)$ l'optimisation globale étant faite en respectant un ensemble des contraintes globales comportant la contrainte : ${z}_{i}^{∨ ∗} \leq {z}_{i} \leq {z}_{i}^{∧ ∗}$ avec g une fonction de coût globale traduisant l'objectif global.

5. Procédé selon la revendication 4, dans lequel la fonction de coût globale g comporte un terme associant la déviation du i^{ème} coût approximatif (Fᵢ) pour chaque sous-réseau (4ᵢ).

6. Procédé selon l'une quelconque des revendications précédentes, dans lequel la détermination, par chaque agent périphérique (10ᵢ), d'une première stratégie de pilotage en effectuant une première optimisation locale consiste à :
- résoudre (212) localement un problème d'optimisation local permettant de déterminer la stratégie de pilotage optimisée localement pour le micro-réseau : 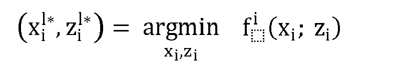 $s . t . {C}_{i} \left({x}_{i}; {z}_{i}\right) = 0$ avec 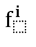 la i^{ème} fonction de coût locale traduisant l'objectif local à optimiser en respectant un ensemble des contraintes locales Cᵢ, et ${x}_{i}^{l ∗}$ les valeurs optimales locales des variables internes ;
- résoudre (214) deux problèmes d'optimisation locaux permettant de déterminer, d'une part, la borne de flexibilité supérieure et, d'autre part ,la borne de flexibilité inférieure, pour la stratégie de pilotage localement optimale du micro-réseau précédemment déterminée, soit pour la borne inférieure : $\left({x}_{i}^{∨ ∗}, {z}_{i}^{∨ ∗}\right) = {argmin}_{{x}_{i} , {z}_{i}} {α}_{i , flex}^{∨} \left({z}_{i}^{l ∗}-{z}_{i}^{∨}\right)$ $s . t . {C}_{i} \left({x}_{i}^{∨}; {z}_{i}^{∨}\right) = 0$ 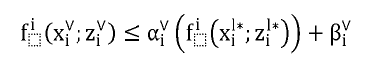 et pour la borne supérieure : $\left({x}_{i}^{∧ ∗}, {z}_{i}^{∧ ∗}\right) = {argmin}_{{x}_{i} , {z}_{i}} {α}_{i , flex}^{∧} \left({z}_{i}^{∧}-{z}_{i}^{l ∗}\right)$ $s . t . {C}_{i} \left({x}_{i}^{∧}; {z}_{i}^{∧}\right) = 0$ 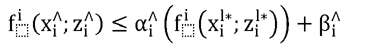 où ${α}_{i , flex}^{∨} , {α}_{i}^{∨} , {β}_{i}^{∨} , {α}_{i , flex}^{∧} , {α}_{i}^{∧}$ et ${β}_{i}^{∧}$ sont des coefficients prédéfinis, ${x}_{i}^{∨ ∗}$ les valeurs optimales locales des bornes inférieures des variables internes et ${x}_{i}^{∧ ∗}$ les valeurs optimales locales des bornes supérieures des variables internes.

7. Procédé selon l'une quelconque des revendications précédentes, dans lequel la détermination, par chaque agent périphérique (10ᵢ), d'une seconde stratégie de pilotage optimisée localement sous contrainte des valeurs optimales globales des variables externes ${z}_{i}^{g ∗}$, s'écrit : 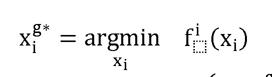 $s . t {C}_{i} \left({x}_{i}; { z}_{i}^{g ∗}\right) = 0$ où 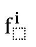 est la i^{ème} fonction de coût locale traduisant l'objectif local à optimiser en respectant un ensemble de contraintes locales Cᵢ et ${x}_{i}^{g ∗}$ sont les valeurs optimales locales des variables internes de la seconde stratégie de pilotage optimisée localement.

8. Procédé selon l'une quelconque des revendications précédentes, comportant une étape finale de pilotage de chaque composant du i^{ème} sous-réseau conformément à la seconde stratégie de pilotage.

9. Procédé selon l'une quelconque des revendications précédentes, le procédé étant itéré pour chaque pas de temps.

10. Procédé selon l'une quelconque des revendications précédentes, le procédé étant itéré au pas de temps courant, les différentes itérations permettant de préciser le i^{ème} coût approximatif.

11. Programme d'ordinateur comportant des instructions logicielles qui, lorsqu'elles sont exécutées par un ordinateur, mettent en œuvre un procédé selon l'une quelconque des revendications précédentes.

## Patentansprüche

1. Computerimplementiertes Verfahren (200) zur mehrstufigen Steuerung durch Bänder einer Infrastruktur (1), die ein elektrisches Netz (2) und ein Steuerungssystem (3) des elektrischen Netzes umfasst, wobei das elektrische Netz (2) eine Vielzahl von elektrischen Teilnetzen (4ᵢ) aggregiert, wobei die elektrischen Teilnetze (4ᵢ) an ein gemeinsames Verteilungsnetz (5) angeschlossen sind, und wobei das Steuerungssystem (3) eine Vielzahl von Randagenten (10ᵢ) und einen Zentralagenten (12) umfasst, wobei der Zentralagent (12) mit den Randagenten (10ᵢ) durch ein Kommunikationsnetz (14) verbunden ist, wobei jeder Randagent (10ᵢ) einem einzigen elektrischen Teilnetz (4ᵢ) zugeordnet ist, um lokal einen Betrieb des zugeordneten elektrischen Teilnetzes zu steuern, und wobei der Zentralagent (12) global einen Betrieb des elektrischen Netzes (2) steuert, wobei das Verfahren die folgenden Schritte umfasst:
- Bestimmung, durch jeden Randagenten (10ᵢ), einer ersten Steuerungsstrategie durch Durchführen einer ersten lokalen Optimierung, durch Implementieren einer i^{-ten} lokalen Kostenfunktion, an einer Menge von Steuerungsvariablen des i^{-ten} elektrischen Teilnetzes (4ᵢ), wobei die Menge von Variablen einerseits interne Variablen xᵢ, die Komponenten des i^{-ten} elektrischen Teilnetzes zugeordnet sind, und andererseits externe Variablen zᵢ umfasst, die dem Anschlusspunkt des i^{-ten} elektrischen Teilnetzes an das Verteilungsnetz (5) zugeordnet sind, wobei die i^{-te} lokale Kostenfunktion die Summe einer ersten i^{-ten} lokalen Teilkostenfunktion ${f}_{x}^{i}$ die lediglich von den internen Variablen xᵢ abhängt, und einer zweiten i^{-ten} externen lokalen Teilkostenfunktion ${f}_{z}^{i}$ die lediglich von den externen Variablen zᵢ abhängt, ist,
wobei die erste Steuerungsstrategie zu lokalen optimalen Werten der internen Variablen, ${x}_{i}^{l ∗}$, lokalen optimalen Werten der externen Variablen ${z}_{i}^{l ∗}$, lokalen optimalen Werten der unteren Grenzwerte der internen Variablen ${x}_{i}^{∨ ∗}$, lokalen optimalen Werten der unteren Grenzwerte der externen Variablen ${z}_{i}^{∨ ∗}$, den lokalen optimalen Werten der oberen Grenzwerte der internen Variablen ${x}_{i}^{∧ ∗}$ und optimalen Werten von oberen Grenzwerten der externen Variablen ${z}_{i}^{∧ ∗}$ führt;
- Übertragung, durch jeden Randagenten (10ᵢ) an den Zentralagenten (12), einer ersten Vielzahl von Informationen, die für jedes elektrische Teilnetz (4ᵢ) umfasst: die lokalen optimalen Werte der externen Variablen ${z}_{i}^{l ∗}$; die lokalen optimalen Werte von unteren Grenzwerten der externen Variablen ${z}_{i}^{∨ ∗}$; und die optimalen Werte von oberen Grenzwerten der externen Variablen ${z}_{i}^{∧ ∗}$ des Teilnetzes;
- Bestimmung, durch den Zentralagenten (12), einer globalen Steuerungsstrategie durch Durchführen einer globalen Optimierung an der Gesamtheit der externen Variablen zᵢ der verschiedenen elektrischen Teilnetze (4ᵢ) ;
- Übertragung, durch den Zentralagenten (12) an jeden Randagenten (10ᵢ), einer zweiten Vielzahl von Informationen, die für jedes elektrische Teilnetz (4ᵢ) die globalen optimalen Werte der externen Variablen ${z}_{i}^{g ∗}$ umfasst; und,
- Bestimmung, durch jeden Randagenten (10ᵢ), einer zweiten Steuerungsstrategie durch Durchführen einer zweiten lokalen Optimierung, unter der Nebenbedingung der globalen optimalen Werte der externen Variablen ( ${z}_{i}^{g ∗}$), an den internen Variablen xᵢ, wobei das Verfahren **dadurch gekennzeichnet ist, dass** die erste Vielzahl von Information ferner zusätzliche Informationen umfasst, wobei die zusätzlichen Informationen für jedes elektrische Teilnetz (4ᵢ) umfassen: einen Wert der ersten i^{-ten} lokalen Teilkostenfunktion für die lokalen optimalen Werte der internen Variablen, ${f}_{x}^{i} \left({x}_{i}^{l ∗}\right)$; einen Wert der ersten i^{-ten} internen lokalen Teilkostenfunktion für die lokalen optimalen Werte der unteren Grenzwerte der internen Variablen, ${f}_{x}^{i} \left({x}_{i}^{∨ ∗}\right)$; und einen Wert der ersten i^{-ten} internen lokalen Teilkostenfunktion für die lokalen optimalen Werte der oberen Grenzwerte der internen Variablen, ${f}_{x}^{i} \left({x}_{i}^{∧ ∗}\right)$,
und dass die Bestimmung, durch den Zentralagenten (12), einer global optimierten Steuerungsstrategie die zusätzlichen Informationen berücksichtigt, um den Beitrag jedes Teilnetzes (4ᵢ) zur global optimierten Steuerungsstrategie zu verteilen, indem für jedes Teilnetz (4ᵢ) eine Abweichung einer i^{-ten} approximativen Kostenfunktion (Fᵢ) berücksichtigt wird, wobei die i^{-te} approximative Kostenfunktion eine Funktion ist, die aus den durch den i^{-ten} Randagenten (10ᵢ) übertragenen zusätzlichen Informationen aufgebaut ist und es ermöglicht, eine Verschlechterung der Kosten der ersten lokal optimierten Steuerungsstrategie zwischen den lokalen optimalen Werten der externen Variablen ${z}_{i}^{l ∗}$ und den globalen optimalen Werten der externen Variablen ${z}_{i}^{g ∗}$ zu bewerten.

2. Verfahren nach Anspruch 1, wobei die i^{-te} approximative Kostenfunktion eine stückweise lineare Funktion ist

3. Verfahren nach Anspruch 2, wobei die i^{-te} approximative Kostenfunktion ein unteres Segment umfasst, das den Punkt mit Koordinaten ${z}_{i}^{∨ ∗}$ und ${f}_{x}^{i} \left({x}_{i}^{∨ ∗}\right)$ und den Punkt mit Koordinaten ${z}_{i}^{l ∗}$ und ${f}_{x}^{i} \left({x}_{i}^{l ∗}\right)$ verbindet, und ein oberes Segment, das den Punkt mit Koordinaten ${z}_{i}^{l ∗}$; ${f}_{x}^{i} \left({x}_{i}^{l ∗}\right)$ und den Punkt mit Koordinaten ${z}_{i}^{∧ ∗}$ und ${f}_{x}^{i} \left({x}_{i}^{∧ ∗}\right)$ verbindet.

4. Verfahren nach irgendeinem der Ansprüche 1 bis 3, wobei die globale Optimierung wie folgt dargestellt wird: $\left({z}_{1}^{g ∗},…,{z}_{i}^{g ∗},…,{z}_{n}^{g ∗}\right) = {argmin}_{{z}_{i}} g \left({z}_{i}\right)$ wobei die globale Optimierung unter Einhaltung einer Menge der globalen Nebenbedingungen durchgeführt wird, die die Nebenbedingung umfasst: ${z}_{i}^{∨ ∗} \leq {z}_{i} \leq {z}_{i}^{∧ ∗}$ mit g einer globalen Kostenfunktion, die das globale Ziel wiedergibt.

5. Verfahren nach Anspruch 4, wobei die globale Kostenfunktion g einen Term umfasst, der die Abweichung der i^{-ten} approximativen Kostenfunktion (Fᵢ) für jedes Teilnetz (4ᵢ) verknüpft.

6. Verfahren nach irgendeinem der vorhergehenden Ansprüche, wobei die Bestimmung, durch jeden Randagenten (10ᵢ), einer ersten Steuerungsstrategie durch Durchführen einer ersten lokalen Optimierung darin besteht:
- lokal ein lokales Optimierungsproblem zu lösen (212), das es ermöglicht, die lokal optimierte Steuerungsstrategie für das Mikronetz zu bestimmen: 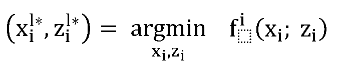 $s . t . {C}_{i} \left({x}_{i}; {z}_{i}\right) = 0$ mit 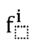 der i^{-ten} lokalen Kostenfunktion, die das zu optimierende lokale Ziel wiedergibt, unter Einhaltung einer Menge der lokalen Nebenbedingungen Cᵢ , und ${x}_{i}^{l ∗}$ den lokalen optimalen Werten der internen Variablen;
- zwei lokale Optimierungsprobleme zu lösen (214), die es ermöglichen, einerseits den oberen Flexibilitätsgrenzwert und andererseits den unteren Flexibilitätsgrenzwert für die zuvor bestimmte lokal optimale Steuerungsstrategie des Mikronetzes zu bestimmen, sei es für den unteren Grenzwert: $\left({x}_{i}^{∨ ∗}, {z}_{i}^{∨ ∗}\right) = {argmin}_{{x}_{i} , {z}_{i}} {α}_{i , flex}^{∨} \left({z}_{i}^{l ∗}-{z}_{i}^{∨}\right)$ $s . t . {C}_{i} \left({x}_{i}^{∨}; {z}_{i}^{∨}\right) = 0$ 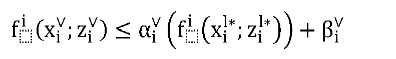 und für den oberen Grenzwert: $\left({x}_{i}^{∧ ∗}, {z}_{i}^{∧ ∗}\right) = {argmin}_{{x}_{i} , {z}_{i}} {α}_{i , flex}^{∧} \left({z}_{i}^{∧}-{z}_{i}^{l ∗}\right)$ $s . t . {C}_{i} \left({x}_{i}^{∧}; {z}_{i}^{∧}\right) = 0$ 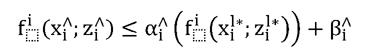 wobei ${α}_{i , flex}^{∨} , {α}_{i}^{∨} , {β}_{i}^{∨} , {α}_{i , flex}^{∧} , {α}_{i}^{∧}$ und ${β}_{i}^{∧}$ vordefinierte Koeffizienten sind, ${x}_{i}^{∨ ∗}$ die lokalen optimalen Werte der unteren Grenzwerte der internen Variablen und ${x}_{i}^{∧ ∗}$ die lokalen optimalen Werte der oberen Grenzwerte der internen Variablen.

7. Verfahren nach irgendeinem der vorhergehenden Ansprüche, wobei die Bestimmung, durch jeden Randagenten (10ᵢ), einer zweiten lokal optimierten Steuerungsstrategie unter der Nebenbedingung der globalen optimalen Werte der externen Variablen ${z}_{i}^{g ∗}$ geschrieben wird: 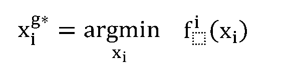 $s . t {C}_{i} \left({x}_{i}; { z}_{i}^{g ∗}\right) = 0$ wobei 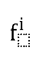 die i^{-te} lokale Kostenfunktion ist, die das zu optimierende lokale Ziel wiedergibt, unter Einhaltung einer Menge von lokalen Nebenbedingungen Cᵢ, und ${x}_{i}^{g ∗}$ die lokalen optimalen Werte der internen Variablen der zweiten lokal optimierten Steuerungsstrategie sind.

8. Verfahren nach irgendeinem der vorhergehenden Ansprüche, umfassend einen abschließenden Schritt der Steuerung jeder Komponente des i^{-ten} Teilnetzes gemäß der zweiten Steuerungsstrategie.

9. Verfahren nach irgendeinem der vorhergehenden Ansprüche, wobei das Verfahren für jeden Zeitschritt iteriert wird.

10. Verfahren nach irgendeinem der vorhergehenden Ansprüche, wobei das Verfahren beim laufenden Zeitschritt iteriert wird, wobei die verschiedenen Iterationen es ermöglichen, die i^{-te} approximative Kostenfunktion zu präzisieren.

11. Computerprogramm, umfassend Softwareanweisungen, die, wenn sie durch einen Computer ausgeführt werden, ein Verfahren nach irgendeinem der vorhergehenden Ansprüche implementieren.

## Claims

1. A method (200), implemented by computer, for multilevel band-based control of an infrastructure (1) including an electrical network (2) and a control system (3) of the electrical network, the electrical network (2) aggregating a plurality of electrical sub-networks (4ᵢ), the electrical sub-networks (4ᵢ) being connected to a common distribution (5) network, and the control system (3) including a plurality of peripheral agents (10ᵢ) and a central agent (12), the central agent (12) being connected to the peripheral agents (10ᵢ) by a communication network (14), each peripheral agent 10ᵢ) being associated with a single electrical sub-network (4ᵢ) in order to locally control the operation of the associated electrical sub-network, and the central agent (12) overall controlling the operation of the electrical network (2), the method including the steps of:
- determination, by each peripheral agent (10ᵢ), of a first control strategy by performing a first local optimization, by implementing a i^{th} local cost function, on a set of control variables of the i^{th} electrical sub-network (4ᵢ), said set of variables comprising, on the one hand, internal variables xᵢ associated with components of the i^{th} electrical sub-network, and, on the other hand, external variables zᵢ associated with the point of connection of the i^{th} electrical sub-network to the distribution network (5), the i^{th} local cost function being the sum of a first i^{th} partial local cost function ${f}_{x}^{i}$ depending only on the internal variables xᵢ and a second partial i^{th} partial local cost function ${f}_{z}^{i}$ depending only on the external variables zᵢ, the first control strategy leading to local optimal values of the internal variables, ${x}_{i}^{l ∗}$, local optimal values of the external variables, ${z}_{i}^{l ∗}$, local optimal values of lower bounds of the internal variables ${x}_{i}^{∨ ∗}$, local optimal values of lower bounds of the external variables ${z}_{i}^{∨ ∗}$, local optimal values of upper bounds of the internal variables ${x}_{i}^{∧ ∗}$ and local optimal values of upper bounds of the external variables externes ${z}_{i}^{∧ ∗}$;
- transmission, by each peripheral agent (10ᵢ) to the central agent (12), of a first plurality of information items including, for each electrical sub-network (4ᵢ) : the local optimal values of the external variables ${z}_{i}^{l ∗}$; the local optimal values of the lower bounds of the external variables ${z}_{i}^{∨ ∗}$; and the optimal values of the upper bounds of the external variables ${z}_{i}^{∧ ∗}$ of the sub-network;
- determination, by the central agent (12), of an overall control strategy by performing an overall optimization on all the external variables zᵢ of the different electrical sub-networks (4ᵢ);
- transmission, by the central agent (12) to each peripheral agent (10ᵢ), of a second plurality of information items including, for each electrical sub-network (4ᵢ), the overall optimal values of the external variables ${z}_{i}^{g ∗}$; and,
- determination, by each peripheral agent (10ᵢ), of a second control strategy by performing a second local optimization, under constraint of the overall optimal values of the external variables ( ${z}_{i}^{g ∗}$), on the internal variables xᵢ,
the method being **characterized in that** the first plurality of information items further includes additional information, the additional information including, for each electrical sub-network (4ᵢ): a value of the first i^{th} partial local cost function on the local optimal values of the internal variables ${f}_{x}^{i} \left({x}_{i}^{l ∗}\right)$; a value of the first i^{th} partial local cost function on the local optimal values of the lower bounds of the internal variables ${f}_{x}^{i} \left({x}_{i}^{∨ ∗}\right)$; and a value of the first i^{th} partial local cost function on the local optimal values of the upper bounds of the internal variables ${f}_{x}^{i} \left({x}_{i}^{∧ ∗}\right)$,
and **in that** the determination, by the central agent (12), of an overall optimized control strategy, takes into account the additional information to distribute the contribution of each sub-network (4ᵢ) to the overall optimized control strategy by taking into account, for each sub-network (4ᵢ), a deviation of an i^{th} approximative cost (Fᵢ), the i^{th} approximative cost being a function based on the additional information transmitted by the i^{th} peripheral agent (10ᵢ) and allowing an evaluation of a degradation of the cost for the first control strategy optimized locally between the local optimal values of the external variables ${z}_{i}^{l ∗}$ and the overall optimal values of the external variables ${z}_{i}^{g ∗}$.

2. The method according to claim 1, wherein the i^{th} approximative cost is a piecewise linear function

3. The method according to claim 2, wherein the i^{th} approximative cost comprises a lower segment connecting the coordinate point ${z}_{i}^{∨ ∗}$ and ${f}_{x}^{i} \left({x}_{i}^{∨ ∗}\right)$ and the coordinate point ${z}_{i}^{l ∗}$ and ${f}_{x}^{i} \left({x}_{i}^{l ∗}\right)$ and an upper segment connecting the coordinate point ${z}_{i}^{l ∗}$; ${f}_{x}^{i} \left({x}_{i}^{l ∗}\right)$ and the coordinate point ${z}_{i}^{∧ ∗}$ and ${f}_{x}^{i} \left({x}_{i}^{∧ ∗}\right)$.

4. The method according to any one of claims 1 to 3, wherein the overall optimization is written: $\left({z}_{1}^{g ∗},…,{z}_{i}^{g ∗},…,{z}_{n}^{g ∗}\right) = {argmin}_{{z}_{i}} g \left({z}_{i}\right)$ the overall optimization being done by satisfying a set of overall constraints including the constraint: ${z}_{i}^{∨ ∗} \leq {z}_{i} \leq {z}_{i}^{∧ ∗}$ with g an overall cost function reflecting the overall objective.

5. The method according to claim 4, wherein the overall cost function g includes a term associating the deviation of the i^{th} approximate cost (Fᵢ) for each sub-network (4ᵢ).

6. The method according to any one of the preceding claims, wherein the determination, by each peripheral agent (10ᵢ), of a first control strategy by performing a first local optimization consists in:
- locally solving (212) a local optimization problem for determining the locally optimized control strategy for the micro-grid: 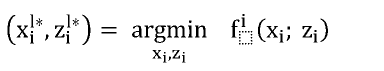 $s . t . {C}_{i} \left({x}_{i}; {z}_{i}\right) = 0$ with 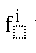 the i^{th} local cost function reflecting the local objective to be optimized by satisfying a set of local constraints Cᵢ , and ${x}_{i}^{l ∗}$ the local optimal values of the internal variables;
- solving (214) two local optimization problems serving to determine, on the one hand, the upper flexibility bound and, on the other hand, the lower flexibility bound, for the previously determined locally optimal control strategy of the micro-network, i.e. for the lower bound: $\left({x}_{i}^{∨ ∗}, {z}_{i}^{∨ ∗}\right) = {argmin}_{{x}_{i} , {z}_{i}} {α}_{i , flex}^{∨} \left({z}_{i}^{l ∗}-{z}_{i}^{∨}\right)$ $s . t . C \left({x}_{i}^{∨}; {z}_{i}^{∨}\right) = 0$ 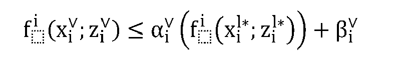 and for the upper bound: $\left({x}_{i}^{∧ ∗}, {z}_{i}^{∧ ∗}\right) = {argmin}_{{x}_{i} , {z}_{i}} {α}_{i , flex}^{∧} \left({z}_{i}^{∧}-{z}_{i}^{l ∗}\right)$ $s . t . {C}_{i} \left({x}_{i}^{∧}; {z}_{i}^{∧}\right) = 0$ 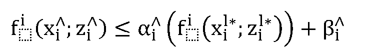 where ${α}_{i , flex}^{∨} , {α}_{i}^{∨} , {β}_{i}^{∨} , {α}_{i , flex}^{∧} , {α}_{i}^{∧}$ and ${β}_{i}^{∧}$are predefined coefficients, ${x}_{i}^{∨ ∗}$ the local optimal values of the lower bounds of the internal variables and ${x}_{i}^{∧ ∗}$ the local optimal values of the upper bounds of the internal variables.

7. The method according to any one of the preceding claims, wherein the determination by each peripheral agent (10ᵢ), of a second locally optimized control strategy under constraint of the overall optimal values of the external variables ${z}_{i}^{g ∗}$ is written as follows: 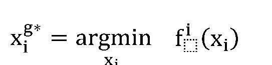 $s . t {C}_{i} \left({x}_{i}; { z}_{i}^{g ∗}\right) = 0$ where 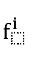 is the i^{th} local cost function translating the local objective to be optimized by satisfying a set of local constraints Cᵢ and ${x}_{i}^{g ∗}$ are the local optimal values of the internal variables of the second locally optimized control strategy.

8. The method according to any one of the preceding claims, including a final step of controlling each component of the i^{th} sub-network according to the second control strategy.

9. The method according to any one of the preceding claims, the method being iterated for each time step.

10. The method according to any one of the preceding claims, the method being iterated at the current time step, the different iterations making it possible to specify the i^{th} approximative cost.

11. A computer program including software instructions which, when executed by a computer, implement a method according to any one of the preceding claims.
